(19) **Europäisches Patentamt**
**European Patent Office**
**Office européen des brevets**

(11) **EP 3 180 816 B1**

(12) **FASCICULE DE BREVET EUROPEEN**

(45) Date de publication et mention
de la délivrance du brevet:
**02.05.2018 Bulletin 2018/18**

(51) Int Cl.:
*H01Q 25/02* (2006.01)  *H01Q 13/02* (2006.01)
*G01S 13/44* (2006.01)

(21) Numéro de dépôt: **15749803.1**

(22) Date de dépôt: **11.08.2015**

(86) Numéro de dépôt international:
**PCT/EP2015/068497**

(87) Numéro de publication internationale:
**WO 2016/023919 (18.02.2016 Gazette 2016/07)**

(54) **SOURCE MULTIBANDE A CORNET COAXIAL AVEC SYSTEMES DE POURSUITE MONOPULSE POUR ANTENNE A REFLECTEUR**

MEHRBANDIGE QUELLE MIT KOAXIALEM HORN MIT MONOPULSNACHFÜHRUNGSVERFAHREN FÜR EINE REFLEKTORANTENNE

MULTIBAND SOURCE FOR A COAXIAL HORN USED IN A MONOPULSE RADAR REFLECTOR ANTENNA.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.08.2014 FR 1457742**

(43) Date de publication de la demande:
**21.06.2017 Bulletin 2017/25**

(73) Titulaire: **ZODIAC DATA SYSTEMS**
**91978 Courtaboeuf Cedex (FR)**

(72) Inventeurs:
• **COUSIN, Pascal**
**F-14650 Carpiquet (FR)**

• **KARAS, Alain**
**F-95130 Le Plessis Bouchard (FR)**

(74) Mandataire: **Regimbeau**
**20, rue de Chazelles**
**75847 Paris Cedex 17 (FR)**

(56) Documents cités:
**US-A- 3 063 049**    **US-A- 4 649 391**
**US-A1- 2011 181 479**   **US-B1- 6 323 819**

• **STEIN S: "On cross coupling in multiple-beam
antennas", IRE TRANSACTIONS ON ANTENNAS
AND PROPAGATION, IEEE, USA, vol. 10, no. 5, 1
septembre 1962 (1962-09-01), pages 548-557,
XP011220166, ISSN: 0096-1973, DOI:
10.1109/TAP.1962.1137917 cité dans la demande**

EP 3 180 816 B1

## Description

### DOMAINE DE L'INVENTION

La présente invention concerne le domaine des sources pour antenne à réflecteur.

### ETAT DE LA TECHNIQUE

On connait des sources pour antenne comprenant un réseau d'éléments rayonnants périphériques, générant une voie différence, disposés en couronne autour d'un guide d'onde central, générant une voie somme. Le diagramme de rayonnement de la voie différence fournit un signal fonction monotone de l'écart d'une cible à l'axe de la source tandis que le diagramme de rayonnement de la voie somme donne un signal maximal dans l'axe de la source. Une fonction d'écartométrie est obtenue en faisant le rapport, d'amplitude et de phase, du diagramme de rayonnement de la voie différence sur le diagramme de rayonnement de la voie somme. De manière connue, il est possible d'extraire un écart angulaire entre la position de la cible et l'axe de la source, à partir des deux signaux reçus simultanément par l'antenne sur ses voies somme et différence.

Les pertes ohmiques augmentant avec la pente d'écartormétrie, il est nécessaire d'établir un compromis entre la précision de poursuite et le facteur de mérite d'une antenne.

Pour se libérer de ce compromis, il a été proposé d'utiliser un extracteur de modes $TE_{21}$ qui découple complètement la voie somme et la voie différence. Or, ce système n'étant pas large bande, il n'est pas compatible avec des applications multibande.

Il a été également proposé d'utiliser une succession de jonctions orthomodes en guide d'ondes disposées orthogonalement à la partie conique d'un cornet et réparties tout le long du cornet. Cette solution est encombrante et onéreuse car elle nécessite l'ajout de filtres sous la forme de guide d'ondes rectangulaire, ce qui rend la solution en pratique inutilisable pour des antennes de taille moyenne.

Par ailleurs, pour obtenir une pente d'écartométrie convenable, il est nécessaire de créer des faisceaux qui se recoupent à de faibles distances angulaires et qui nécessitent donc de rapprocher les éléments périphériques au plus près du guide d'onde central. Cependant, ce rapprochement a pour conséquence, qu'une partie de la puissance provenant de l'onde se propageant dans le guide d'onde central est captée par les éléments rayonnants périphériques bien que ceux-ci soient initialement destinées à créer la voie différence. En fonction de cette distance de séparation, en moyenne 2 à 3% de la puissance injectée dans le guide d'onde central est transmise vers chaque élément rayonnant périphérique. Au total 15 à 25 % de la puissance est ainsi couplée vers les éléments périphériques et est susceptible d'être transformée en pertes ohmiques altérant le rendement de la source. Ces pertes ohmiques sont impossibles à compenser malgré l'ajout d'amplificateurs faible bruit sur chaque élément rayonnant, ce qui engendre une chute de rendement sur la voie somme et donc une forte diminution du facteur de mérite de l'antenne.

### RESUME DE L'INVENTION

Un but de l'invention est de limiter la puissance couplée entre la voie somme et la voie différence dans une source pour antenne, et ce, sans altérer significativement la bande passante en fréquence de la source.

Ce but est atteint dans le cadre de la présente invention grâce à une source pour antenne à réflecteur, comprenant :

- une pseudo-cavité,
- un premier dispositif d'excitation sigma pour exciter la pseudo-cavité selon deux modes $TE_{11}$ orthogonaux de manière à générer un signal de voie somme via un guide d'onde coaxial,
- un deuxième dispositif d'excitation pour exciter la pseudo-cavité selon deux modes $TE_{21}$ de manière à générer un signal de voie différence par combinaison en quadrature des deux modes $TE_{21}$, le deuxième dispositif comprenant huit sondes réparties angulairement autour d'un axe principal d'émission de la source, et un circuit d'alimentation différence pour alimenter les huit sondes d'excitation selon les deux modes $TE_{21}$,

dans laquelle le circuit d'alimentation différence comprend quatre lignes d'alimentation alimentant chacune deux sondes diamétralement opposées, chaque ligne d'alimentation comprenant une branche d'alimentation commune et deux branches d'alimentation terminales chacune raccordée d'une part à la branche d'alimentation commune en un point d'embranchement et d'autre part à une sonde d'excitation respective en un point d'excitation de la sonde, et dans laquelle les branches terminales sont dimensionnées de sorte qu'un couplage du signal de voie somme avec les huit sondes d'excitation de la voie différence génère une onde stationnaire sur les branches d'alimentation terminales, l'onde stationnaire présentant un noeud de champ électrique au point d'embranchement et un noeud de champ magnétique à chacun des points d'excitation des sondes.

Dans une telle source, la génération de l'onde stationnaire présentant un noeud de champ électrique au point d'embranchement et un noeud de champ magnétique à chacun des points d'excitation des sondes, a pour effet que le signal de voie somme soit intégralement restitué, sans perte, par les huit sondes, tout en restant en phase avec le signal de voie somme généré, au lieu d'être transmis vers les branches d'alimentation communes de la voie différence. De cette manière, la voie différence se trouve isolée de la voie somme, et les pertes ohmiques sont réduites.

L'invention permet en outre d'étendre le fonctionnement de la source pour antenne au fonctionnement simultané sur plusieurs bandes de fréquences.

Il est à noter que la présente invention permet de contourner la limite de Stein.

La limite de Stein (décrite notamment dans Stein, Seymour, "On cross coupling in multiple-beam antennas", Antennas and Propagation, IRE Transactions on , vol.10, no.5, pp.548,557, September 1962, et Johansson, J.F., «Stein's limit for finite and infinite multibeam arrays», Antennas and Propagation Society International Symposium, 1989. AP-S. Digest , vol., no., pp.713,716 vol.2, 26-30 June 1989) est une limite théorique qui prédit le rendement maximal atteignable d'une antenne multifaisceaux connaissant uniquement les diagrammes de rayonnement individuels des sources primaires et les distances respectives qui les séparent.

Une antenne possédant une fonction de poursuite réalisée à partir d'un élément central (constituant la voie somme) et d'éléments périphériques (constituant la voie différence) est de ce fait une antenne multifaisceaux dont les performances maximales en terme de rendement sont fixées par la limite de Stein, à savoir, le rendement maximal de la voie somme est en effet calculé comme étant l'inverse de la plus grande valeur propre de la matrice de couplage telle que définie dans les articles mentionnés ci-après.

La présente invention permet de contourner la limite de Stein en transformant l'énergie couplée, transférée de l'élément central vers les éléments périphériques, en énergie re-rayonnée de telle façon que les ondes électromagnétiques qui y sont associées restent toujours en phase avec l'onde issue de l'élément central garantissant ainsi un rendement supérieur à celui prédit par la limite de Stein.

La source peut en outre présenter les caractéristiques suivantes :

- la longueur physique de chaque branche d'alimentation terminale est choisie de manière à déphaser l'onde électromagnétique qui se propage dans la branche d'alimentation terminale depuis le point d'embranchement jusqu'au point d'excitation d'une valeur égale à la moitié d'un multiple impair de 180 degrés ;
- la longueur physique de chaque branche d'alimentation terminale est choisie de manière à déphaser l'onde électromagnétique qui se propage dans la branche d'alimentation terminale depuis le point d'embranchement jusqu'au point d'excitation d'une valeur égale à 270 degrés ;
- la longueur physique de chaque branche d'alimentation terminale est choisie de manière à déphaser l'onde électromagnétique qui se propage dans la branche d'alimentation terminale depuis le point d'embranchement jusqu'au point d'excitation d'une valeur égale à 450 degrés ;

- la source comporte en outre un iris positionné en sortie de la pseudo-cavité pour réaliser une adaptation d'impédance et limiter une perte par réflexion du signal de voie somme, l'iris supportant intérieurement le circuit d'alimentation de voie différence, l'iris étant adapté pour empêcher toute propagation du mode $TE_{21}$ généré par les huit sondes vers le guide d'onde central ;
- la source comprend en outre un cornet externe et un cornet interne, le cornet externe et le cornet interne définissant entre eux la pseudo-cavité dans laquelle est généré le signal de voie somme à une première longueur d'onde ;
- la source comprend :

  - un guide d'onde central secondaire,
  - un troisième dispositif d'excitation pour exciter le guide d'onde central secondaire de manière à générer un signal de voie somme et un signal de voie différence à une deuxième fréquence ;
  - le guide d'onde central secondaire s'étend à l'intérieur du cornet interne ;
  - les branches d'alimentation terminales comprennent des lignes ruban ;
  - le premier dispositif d'excitation sigma comporte un dispositif d'excitation sigma en polarisation linéaire pour exciter la pseudo-cavité selon deux modes $TE_{11}$ orthogonaux de manière à générer deux signaux de voie somme en polarisation linéaire, et un polariseur coaxial à iris afin de générer un signal de voie somme en polarisation circulaire par combinaison en quadrature des deux modes $TE_{11}$ en polarisation linéaire ;
  - le premier dispositif d'excitation sigma en polarisation linéaire comprend une ouverture d'accès coaxial périphérique à l'extrémité du cornet externe, un dispositif de génération du mode $TE_{11}$ horizontal et un dispositif de génération du mode $TE_{11}$ vertical, le dispositif de génération du mode $TE_{11}$ horizontal et le dispositif de génération du mode $TE_{11}$ vertical comprennent chacun un connecteur coaxial et deux transitions à nervures, chaque connecteur coaxial étant connecté à deux transitions à nervures antisymétriques par rapport à un plan longitudinal du guide d'onde central.

**DESCRIPTION DES FIGURES**

D'autres objectifs, caractéristiques et avantages ressortiront de la description détaillée qui suit en référence aux dessins donnés à titre illustratif et non limitatif parmi lesquels :

la figure 1 est une coupe longitudinale en 3 dimensions d'une source bibande conforme à un mode de réalisation de l'invention ;

- les figures 2 et 2bis représentent des lignes d'alimentation et des sondes d'excitation du mode $TE_{21}$ de la source bibande ;
- la figure 3 est une vue éclatée de la source bibande ;
- la figure 3a est une vue en coupe du dispositif d'excitation large bande des deux modes $TE_{11}$ orthogonaux ;
- la figure 3b est une vue éclatée du dispositif d'excitation large bande de la figure 3a ;
- la figure 3c représente le champ électrique dans le dispositif d'excitation large bande de la figure 3a ;
- les figure 4 et 6 sont des vues en perspective des circuits imprimés comprenant les lignes d'alimentation, et des sondes ;
- la figure 5 est une vue en perspective des lignes d'alimentation ;
- la figure 7 est une vue en coupe longitudinale d'une partie de la source incluant une vue agrandie montrant les circuits imprimés incorporés dans l'iris ;
- les figures 8a, 8b, 8c et 8d représentent schématiquement l'onde stationnaire générée sur les branches d'alimentation terminales d'une ligne d'alimentation à des instants successifs;
- la figure 9 est une vue en perspective d'une source tribande conforme à un autre mode de réalisation de l'invention ;
- la figure 10 est une coupe longitudinale en 3 dimensions de la source de la figure 9 ;
- la figure 11 est une vue agrandie d'une partie de la figure 10 ;
- la figure 12 est une vue en perspective des circuits imprimés comprenant les lignes d'alimentation ;
- la figure 13 est un diagramme représentant les pertes par réflexion en décibel (dB) sur la voie somme d'une première bande de fréquence en l'occurrence la bande S, simulées pour une source bibande conforme à l'invention ;
- les figures 14 et 15, illustrent les pertes ohmiques additionnées aux pertes par réflexion, en bande S, respectivement sur la voie Somme et sur la voie Différence ;
- les figures 16 et 17 représentent les diagrammes de rayonnement de la copolarisation et la contrepolarisation respectivement en bande S et X ;
- la figure 18, représente la pente d'écartométrie par rapport à l'angle d'ouverture à -3dB en bande S et en bande X.

## DESCRIPTION DETAILLEE DE L'INVENTION

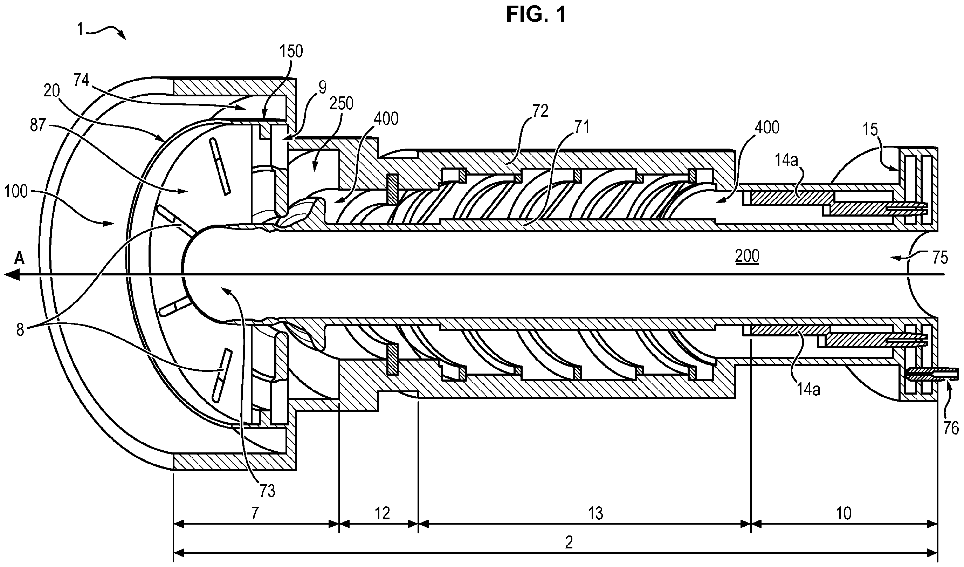

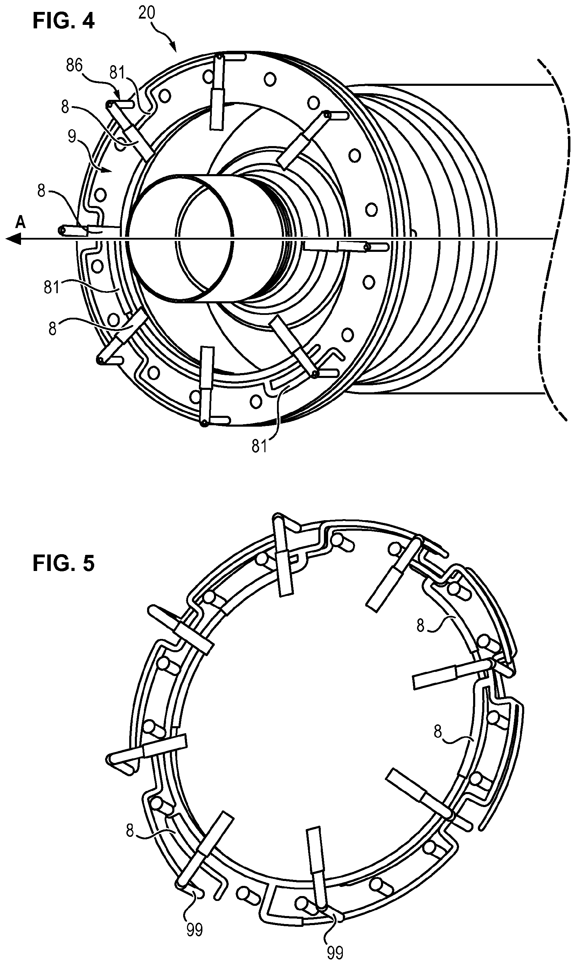

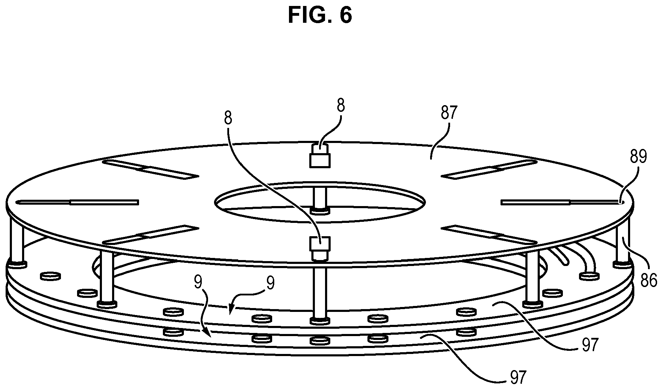

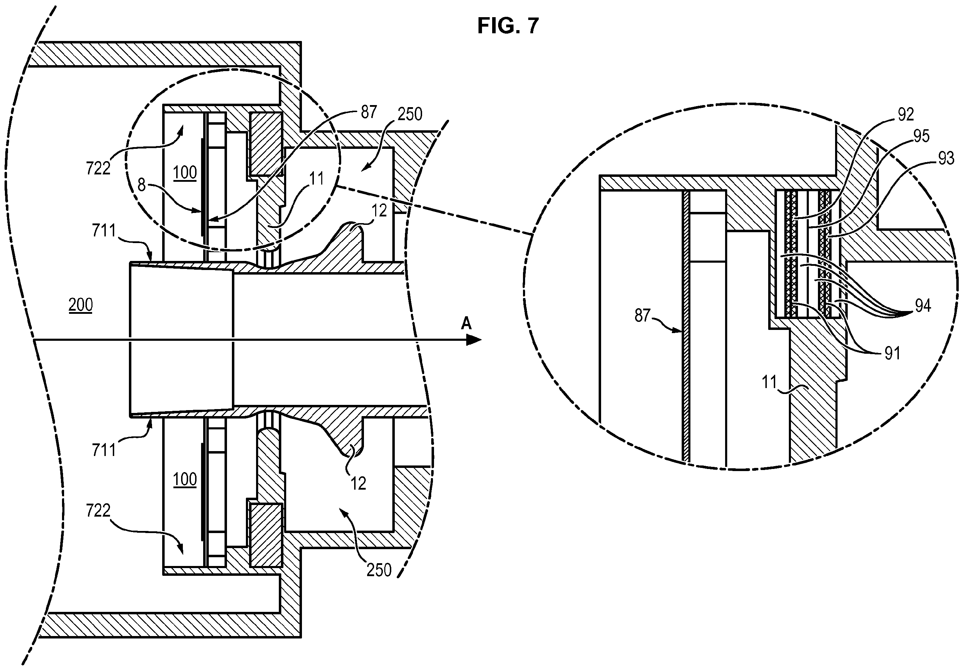

En référence aux figures 1 à 8, une source 1 pour antenne à réflecteur présentant un axe A principal d'émission comprend un cornet externe 72 et un cornet interne 71 ayant pour axe commun un axe A principal d'émission. Soient « C » la célérité de la lumière dans le vide et $F_c$ la fréquence centrale de fonctionnement du cornet définie par $F_c = \sqrt{F_{min} \times F_{max}}$ où $F_{min}$ et $F_{max}$ correspondent respectivement aux fréquences minimale et maximale de fonctionnement du cornet.

Les cornets externe 72 et interne 71 ont par exemple une longueur de 3.5 fois C/Fc (soit 475 millimètres (mm) en bande S [2.02GHz à 2.4 GHz]).

Le cornet interne 71 est de forme générale cylindrique et présente, à l'une de ses extrémités, une embouchure d'émission 73 et à son autre extrémité une ouverture d'accès centrale 75.

Le cornet externe 72 est de forme générale cylindrique et présente à l'une de ces extrémités une embouchure d'émission 74 élargie. Dans l'exemple de réalisation de la figure 1, cette embouchure d'émission 74 présente un diamètre de l'ordre de 1.25 à 1.3 fois C /Fc (soit 175 mm en bande S).

Dans la suite de la description, on considèrera que l'axe A principal d'émission de la source est orienté dans le sens de l'émission. Toutefois, la source 1 peut bien entendu être utilisée en réception.

La source 1 comprend dans le sens de l'axe A principal d'émission, un iris primaire 11, un iris secondaire 12, un circuit imprimé multicouche de forme annulaire 9 et huit sondes d'excitation 8.

L'iris primaire 11 et l'iris secondaire 12 s'étendent entre les cornets externe 72 et interne 71, en aval des sondes d'excitation 8, dans un plan transverse à l'axe A principal d'émission de la source. L'iris primaire 11 s'étend à partir d'un bord interne du cornet externe 72 vers le cornet interne 71. La distance entre l'iris primaire 11 et le cornet interne 71 est choisie en fonction de la puissance de la source 1. L'iris secondaire 12 s'étend à partir d'un bord externe du cornet interne 71 en aval de l'iris primaire 11.

Le bord interne du cornet externe 72, l'iris primaire 11 et le bord externe du cornet interne 71 délimitent ensemble une pseudo-cavité 100 résonnante dans laquelle le mode $TE_{21}$ d'une première bande de fréquence est généré.

Le cornet interne 71 délimite un guide d'onde central 200, dans laquelle les modes $TE_{21}$ et $TE_{11}$ d'une seconde bande de fréquence sont générés.

Le cornet interne 71 et le cornet externe 72 délimitent entre eux un guide d'onde coaxial 400, dans laquelle le mode $TE_{11}$ de la première bande de fréquence est généré.

Le guide d'onde coaxial 400 présente à son extrémité aval un élargissement définissant une cavité intérieure secondaire 250.

La cavité intérieure 250 secondaire permet un ajustement précis de l'impédance des modes $TE_{11}$.

La pseudo-cavité 100 est cylindrique. Elle est résonante dans la bande de fréquence inférieure et présente un piège axial 150 afin de générer un mode hybride HE$_{11}$ qui garantit un diagramme de rayonnement avec une très faible contrepolarisation.

L'iris primaire 11 et l'iris secondaire 12 sont optimisés pour permettre une adaptation du mode TE$_{11}$. Les arêtes des iris ont été chanfreinées ou arrondies pour limiter l'apparition de pics localisés de champ électrique propices aux amorces de claquage à forte puissance d'émission.

La source 1 comporte un premier dispositif d'excitation sigma 10 pour exciter la pseudo-cavité 100 selon deux modes TE$_{11}$ de la première bande de fréquence de manière à générer un signal de voie somme

Le premier dispositif d'excitation sigma 10 comporte un dispositif d'excitation sigma en polarisation linéaire 101 pour générer un signal de voie somme en polarisation linéaire et une série de polariseurs 13 coaxiaux à iris disposés transversalement à l'axe A afin de générer la polarisation circulaire de la voie somme par combinaison en quadrature des deux modes TE$_{11}$ en polarisation linéaire.

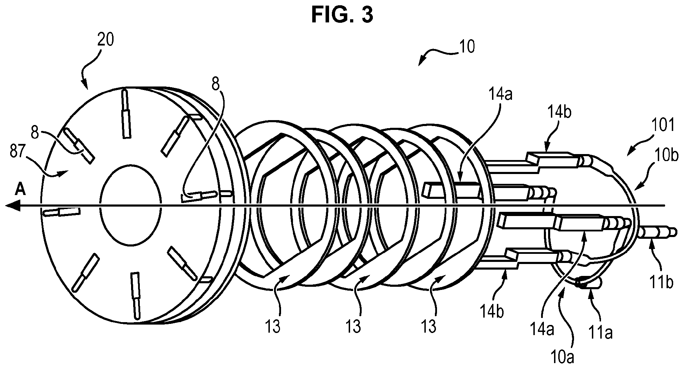

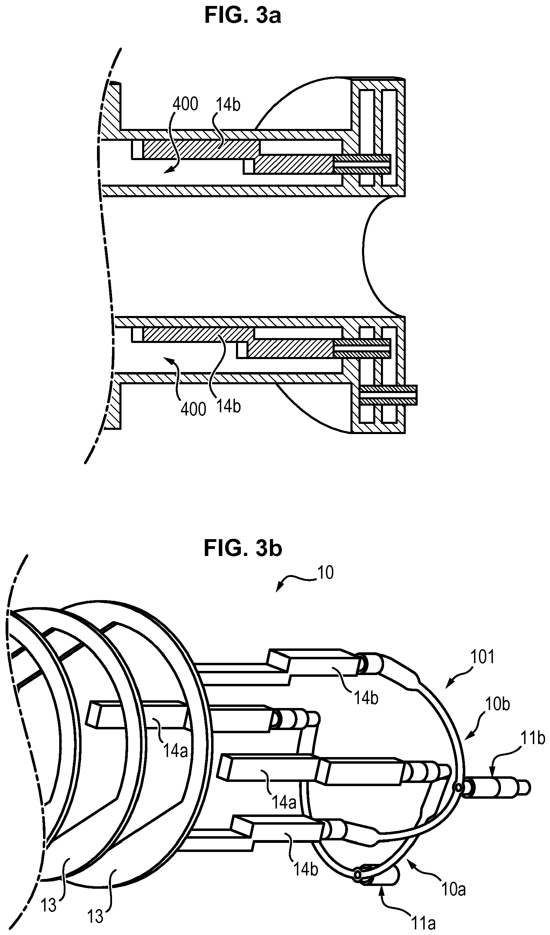

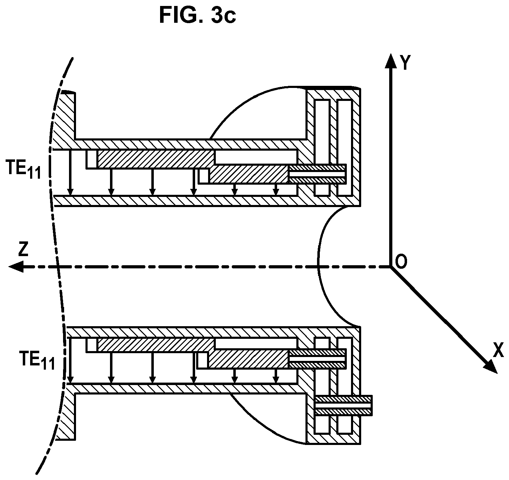

En référence aux figures 3a et 3b, le premier dispositif d'excitation sigma en polarisation linéaire 101 comprend une ouverture d'accès coaxial périphérique 76 à l'extrémité du cornet externe 72, un diviseur -3dB 15, un dispositif de génération du mode TE$_{11}$ horizontal 10a et un dispositif de génération du mode TE$_{11}$ vertical 10b.

Le dispositif de génération du mode TE$_{11}$ horizontal 10a et le dispositif de génération du mode TE$_{11}$ vertical 10b comprennent chacun un connecteur coaxial 11a (respectivement 11b) et deux transitions à nervures 14a (respectivement 14b), chaque connecteur coaxial 11a (respectivement 11b) étant connecté à deux transitions à nervures 14a (respectivement 14b).

Les deux transitions nervurées, auxquelles est connecté un même dispositif de génération du mode TE$_{11}$, sont non inversées l'une par rapport à l'autre, c'est-à-dire qu'elles sont antisymétriques par rapport à un plan longitudinal du guide d'onde central 200. Le plan ZOX par rapport auquel les deux transitions nervurées 14a sont connectées au dispositif de génération du mode TE$_{11}$ horizontal 10a est perpendiculaire au plan ZOY par rapport auquel les deux transitions nervurées 14b sont connectées au dispositif de génération du mode TE$_{11}$ vertical 10b.

Les transitions nervurées 14a, 14b étant antisymétriques par rapport à un plan longitudinal du guide d'onde central 200, le champ électrique E reste polarisé dans la même direction lorsque les signaux au niveau des connecteurs coaxiaux 11a, 11b sont en phase. Les signaux sont ensuite recombinés par le diviseur -3dB 15. Cette disposition permet de recombiner les signaux par un simple diviseur -3dB, ce qui évite l'utilisation d'un hybride 0/180° et assure une plus grande largeur de bande passante de l'excitateur de modes TE$_{11}$.

La source 1 comporte en outre un deuxième dispositif d'excitation 20 pour exciter la pseudo-cavité 100 selon deux modes TE$_{21}$ de manière à générer un signal de voie différence par combinaison en quadrature des deux modes TE$_{21}$.

Le deuxième dispositif 20 comprend huit sondes d'excitation 8 angulairement équiréparties autour de l'axe principal A d'émission de la source 1, et un circuit d'alimentation différence 25 pour alimenter les huit sondes d'excitation selon les deux modes TE$_{21}$.

Les huit sondes d'excitation 8 sont supportées par un substrat annulaire 87 en téflon disposé dans un plan transverse à l'axe A principal d'émission de la source 1, le substrat annulaire 87 étant positionné en aval de l'iris secondaire 12.

Les sondes d'excitation 8 sont des éléments rectangulaires, présentant typiquement une largeur de l'ordre de 0.03 fois C/Fc (avec C la célérité de la lumière et Fc le fréquence de coupure), soit de l'ordre de 4 millimètres (mm) en bande S [2.02GHz à 2.4 GHz]) et une longueur de l'ordre de 0.2 fois C/Fc soit 27 millimètres (mm) la longueur des sondes d'excitation 8 étant orientée radialement par rapport à l'axe A de la source 1.

Le circuit d'alimentation différence 25 comprend quatre lignes d'alimentation 81 alimentant chacune deux sondes 8 diamétralement opposées, chaque ligne d'alimentation 81 comprenant une branche d'alimentation commune 88 et deux branches d'alimentation terminales 89. Chaque branche d'alimentation terminale 89 est raccordée d'une part à la branche d'alimentation commune 88 en un point d'embranchement P3 et d'autre part à une sonde d'excitation 8 respective, par l'intermédiaire d'une ligne coaxiale de transmission 86, en un point d'excitation P1, P2 de la sonde.

Les lignes alimentation 81 sont des lignes ruban disposées sur deux circuits imprimés double couche 9 de forme annulaire disposés à l'intérieur de l'iris primaire 11. Les deux circuits imprimés double couche 9 sont disposés transversalement à l'axe A principal d'émission autour de l'embouchure 73 du cornet interne 71 et à l'intérieur de l'embouchure 74 du cornet externe 72.

Chaque circuit imprimé double couche 9 comporte une couche de circuit imprimé supérieure 92, une couche de circuit imprimé inférieure 93 et un plan de masse de substrat 91 entre les deux couches. Les circuits imprimés double couche 9 sont agencés de manière à intercaler deux couches d'air 94 entre la couche de circuit imprimé supérieure 92, la couche de circuit imprimé inférieure 93 et le plan de masse de substrat 91. Les deux couches d'air 94 sont séparées par un plan de masse séparateur entre couches d'air 95. Les couches 92, 93 de circuit imprimé sont réalisées sur un substrat en polytétrafluoroéthylène (PTFE). Les substrats comportent des trous d'alimentation 99 pour assurer la continuité des circuits d'alimentation entre les couches sans croisements.

Les huit sondes d'excitation 8 sont adaptées pour exciter les deux modes propres TE$_{21}$ de la pseudo-cavité résonante 100. Les deux modes TE$_{21}$ n'étant donc pas générés dans le guide d'ondes coaxial 400 mais directement dans la pseudo-cavité 100, le problème de l'adaptation d'impédance conjointe des modes $TE_{11}/TE_{21}$ est, de cette manière, résolu sur une large bande passante.

Les branches terminales 89 sont dimensionnées de sorte qu'un couplage du signal de voie somme avec les huit sondes d'excitation 8 de la voie différence génère une onde stationnaire sur les branches d'alimentation terminales 89.

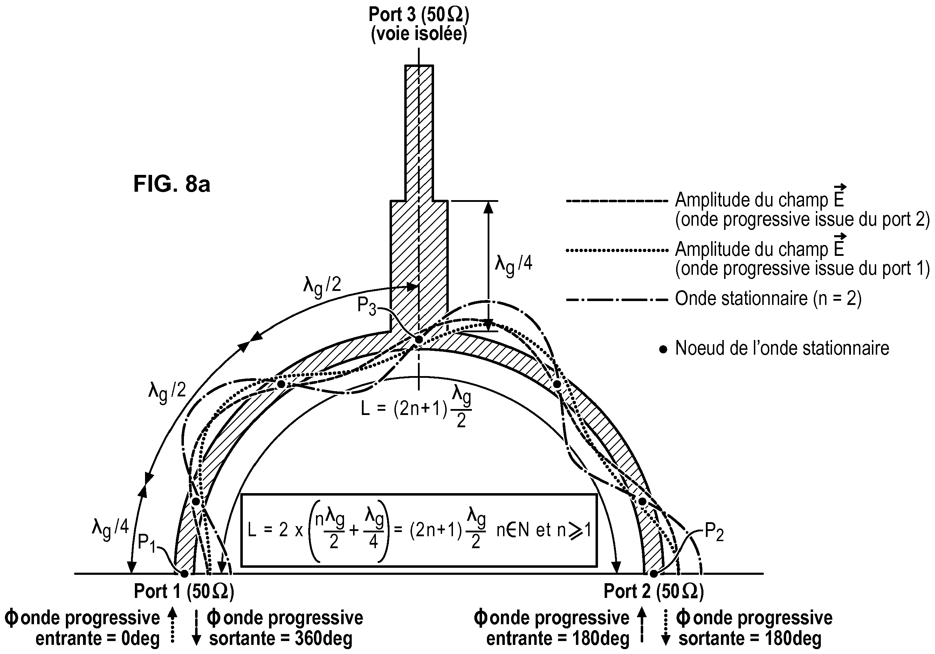

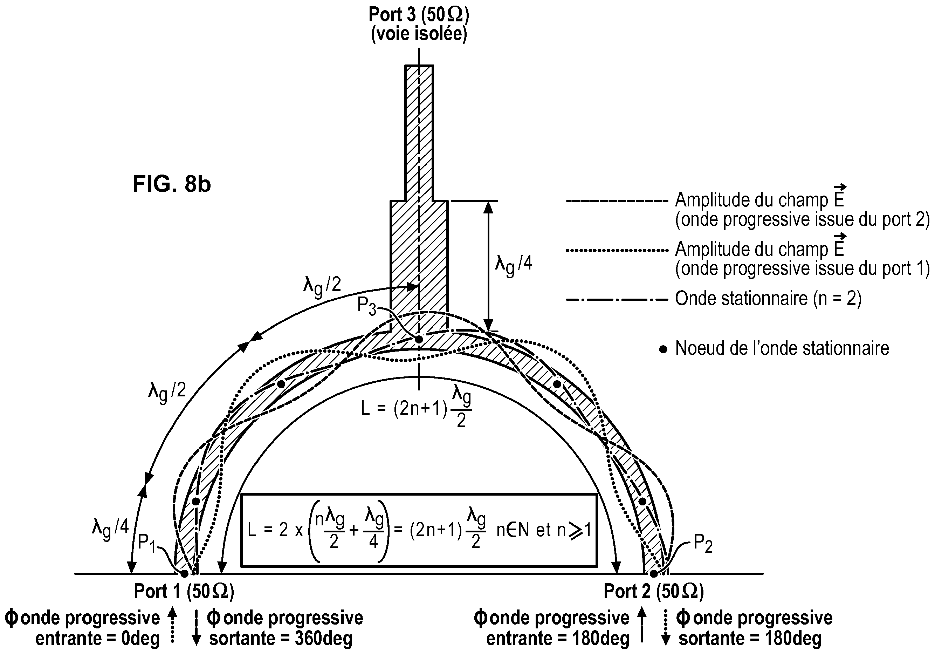

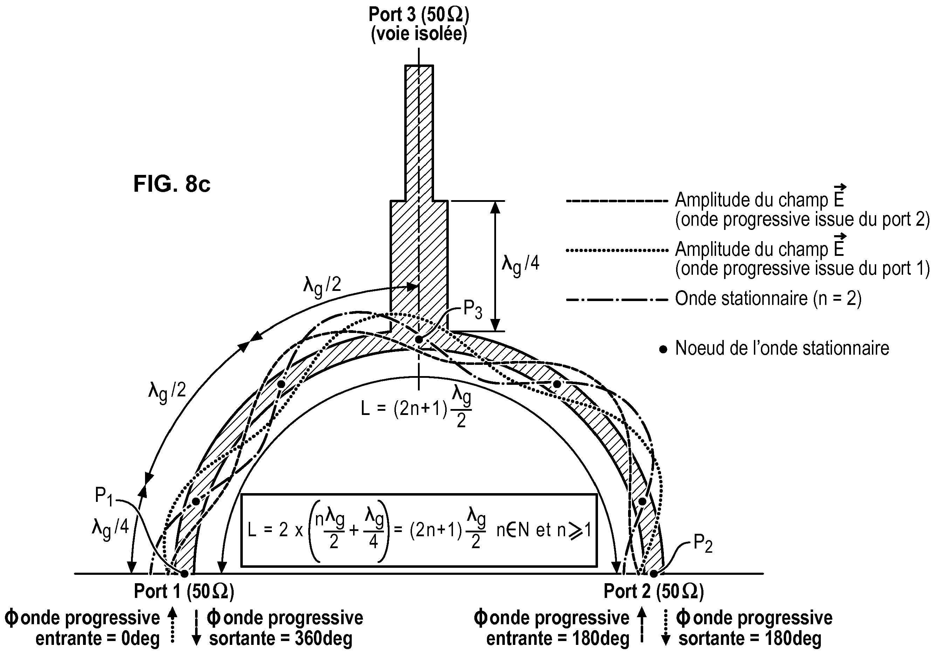

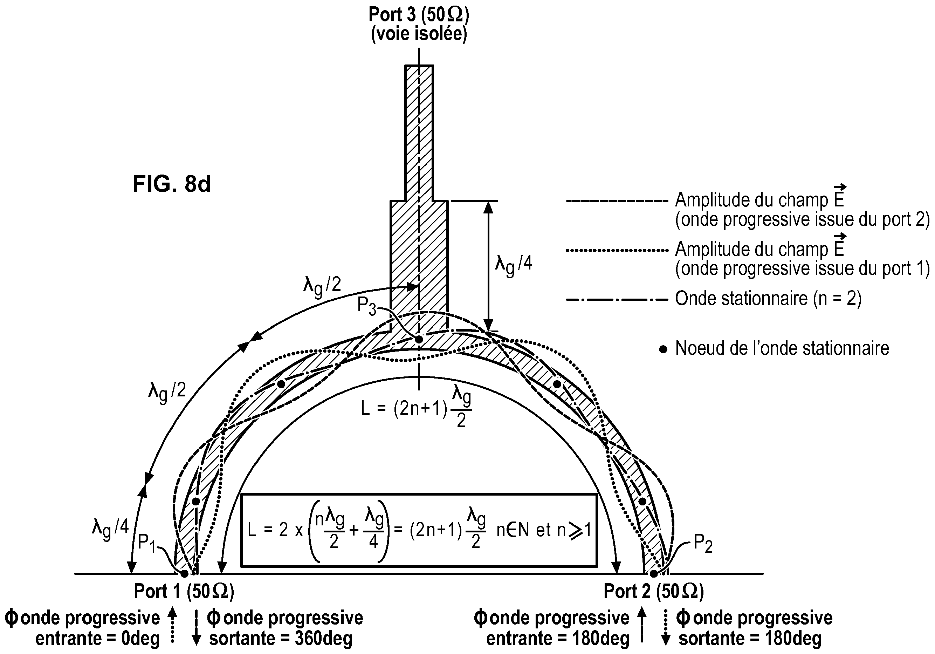

Comme illustré en figure 8, une onde stationnaire entre chaque paire de sondes d'excitation 8 diamétralement opposés est ainsi créée de façon à ce que les deux modes $TE_{11}$ qui proviennent du guide d'ondes coaxial 400 et qui se couplent d'habitude avec les sondes d'excitation 8 soient complètement réfléchis au niveau des embranchements P3 des lignes d'alimentation 81. La branche commune 88 de la ligne d'alimentation 81 correspond alors à un noeud de l'onde stationnaire.

Comme on peut le voir schématiquement sur les figures 8a, 8b, 8c et 8d, l'onde stationnaire générée sur les branches d'alimentation terminales 89 d'une ligne d'alimentation à des instants successifs, résulte du couplage entre les sondes 8 et le mode $TE_{11}$ qui provient du guide d'ondes coaxial 400.

La longueur électrique de la ligne d'alimentation 81 séparant deux sondes 8 diamétralement opposées est choisie de manière à assurer des conditions de phase adéquates qui annihilent totalement les interférences destructives entre l'onde générée par le guide d'ondes coaxial 400 et l'onde réfléchie puis rediffusée provenant du couplage avec les sondes 8.

Plus précisément, l'onde stationnaire présente un noeud de champ électrique au point d'embranchement P3 et un noeud de champ magnétique à chacun des points d'excitation des sondes P1 et P2. De cette manière, le signal de voie somme est intégralement restitué sans pertes par les huit sondes 8, tout en restant en phase avec le signal de voie somme généré par le guide d'ondes coaxial 400, au lieu d'être transmis vers les branches d'alimentation communes 88 de la voie différence.

En effet, en raison de l'orientation du champ électrique intrinsèque au mode $TE_{11}$, les deux ondes progressives entrantes, provenant du couplage de deux sondes 8 diamétralement opposées avec le mode $TE_{11}$ de la voie somme, sont en opposition de phase à leur point d'excitation respectif ($\Phi=0°$ au point d'excitation P1 pour l'onde entrante au port 1 et $\Phi=180°$ au point d'excitation P2 pour l'onde entrante au port 2) et se propagent en sens inverse sur les branches terminales 89. Ces deux ondes entrantes restent de même amplitude et en opposition de phase au point d'embranchement P3 car elles ont parcouru une distance égale dans les branches d'alimentation terminales 89. Le champ électrique résultant de la superposition de ces deux ondes entrantes s'annule donc au point d'embranchement P3, ce qui équivaut à un court-circuit (impédance nulle) c'est-à-dire à un noeud électrique de l'onde stationnaire.

En conséquence, aucune puissance n'est transmise vers la branche d'alimentation commune 88, qui reste donc isolée. Toute la puissance incidente au point d'alimentation P1 est alors transmise vers le point d'alimentation P2 et inversement.

En outre, afin que la restitution de cette puissance couplée sous forme de rayonnement soit optimale (c'est-à-dire pour garantir l'absence d'interférences destructives par re-rayonnement dans le plan des sondes 8), il est nécessaire qu'aux points d'alimentation P1 (resp. P2), les champs électriques de l'onde progressive entrante issue du port 1 (resp. du port 2) et de l'onde progressive sortante issue du port 2 (resp. du port 1) restent parfaitement en phase entre eux et également en phase avec le champ électrique de l'onde issue de la voie somme et provenant du guide d'onde coaxial 400 (mode $TE_{11}$).

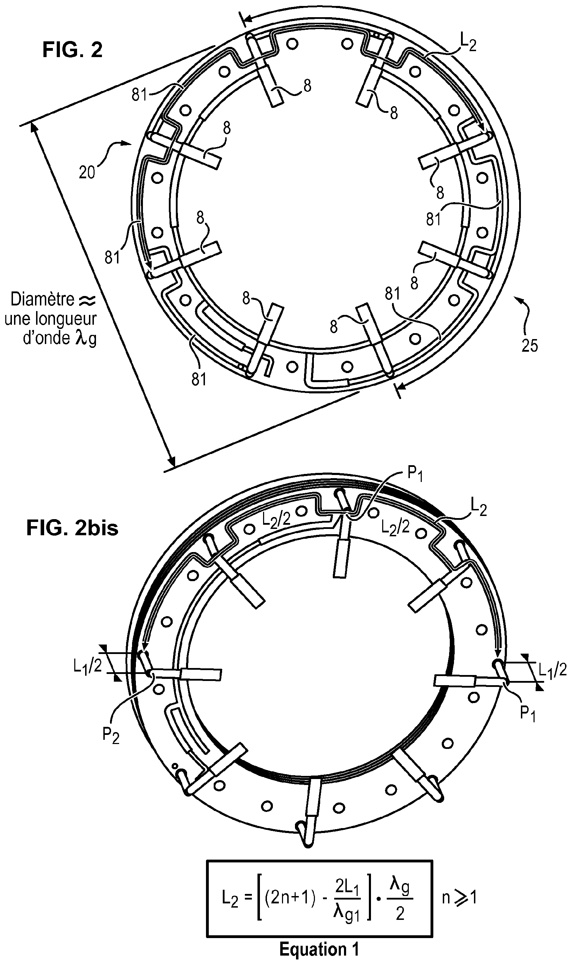

En référence à la figure 2, cette condition implique que la longueur électrique séparant deux sondes 8 diamétralement opposées soit égale à un multiple impair de Pi (180 degrés). A cet effet, la longueur physique L de la ligne d'alimentation 81 entre les points d'alimentation P1 et P2 doit être égale à un multiple impair de demi-longueurs d'onde guidée (soit $L=(2n+1)\lambda g/2$ avec $n \in \mathbb{N}$ et $n \geq 1$ où $\lambda g$ représente la longueur d'onde guidée des lignes d'alimentation 81 à une fréquence centrale dans la bande considérée).

En référence à la figure 2b, plus exactement et pour tenir compte de la longueur des lignes coaxiales de transmission 86, la longueur physique L de la ligne d'alimentation 81 entre les points d'alimentation P1 et P2 doit est égale à :

$$[(2n+1)-2 \, L1/\lambda g1] \, \lambda g/2 \text{ (Equation 1)},$$

avec L1 la longueur des lignes coaxiales de transmission 86 et $\lambda g1$ la longueur d'onde guidée dans les lignes coaxiales de transmission 86 à une fréquence centrale dans la bande considérée.

Autrement dit, la longueur physique de chaque branche d'alimentation terminale 89 est égale à la moitié d'un multiple impair d'une demi-longueur d'onde guidée du signal de voie somme, de manière à ce que l'onde électromagnétique qui se propage dans la branche d'alimentation terminale 89 depuis le point d'embranchement P3 jusqu'au point d'excitation P1, P2, soit déphasée d'une valeur égale à (2n+1)*Pi/2, à savoir un multiple impair de 90°, en régime harmonique et à la fréquence centrale de fonctionnement du signal de voie somme, avec n nombre entier non nul.

Par superposition des deux ondes progressives se propageant en sens inverse, les points d'alimentation P1 et P2 correspondent alors à des ventres de l'onde stationnaire pour le champ électrique E et à des noeuds de l'onde stationnaire pour le champ magnétique H, le champ électrique E et le champ magnétique H étant en quadrature. Les courants électriques s'annulent donc aux points d'alimentation P1 et P2 qui correspondent alors à un circuit ouvert (admittance nulle).

Dans un mode de réalisation particulier (n=1), la longueur électrique de chaque branche d'alimentation terminale 89 est égale à trois-quarts de longueur d'onde guidée du signal de voie somme. Dans ce cas, le déphasage est d'une valeur égale à 270 degrés en régime harmonique et à la fréquence centrale de fonctionnement du signal de voie somme.

Dans un mode de réalisation particulier (n=2), la longueur électrique de chaque branche d'alimentation terminale 89 est égale à cinq-quarts de longueur d'onde guidée du signal de voie somme. Dans ce cas, le déphasage est d'une valeur égale à 450 degrés en régime harmonique et à la fréquence centrale de fonctionnement du signal de voie somme.

Dans un autre mode de réalisation particulier (n=3), la longueur électrique de chaque branche d'alimentation terminale est égale à sept-quarts de longueur d'onde guidée du signal de voie somme. Dans ce cas, le déphasage est d'une valeur égale à 630 degrés en régime harmonique et à la fréquence centrale de fonctionnement du signal de voie somme.

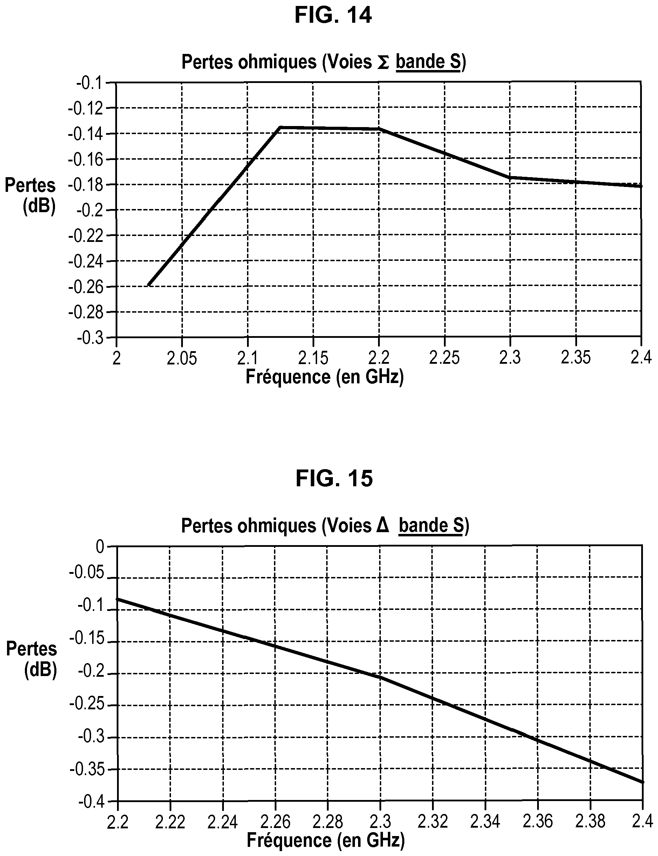

La résonance des ondes stationnaires générées sur les lignes d'alimentation 81 jusqu'aux embranchements P3 est de cette façon accordée avec la résonance propre de la pseudo-cavité résonnante 100 coaxiale, si bien que les huit sondes d'excitation 8 restent neutres vis-à-vis des modes TE11 provenant du guide d'onde coaxial 400, et ne perturbent donc nullement le diagramme de rayonnement de la voie somme. Les pertes ohmiques sont ainsi réduites à leur minimum, comme on peut le voir sur les figures 14 et 15, illustrant les pertes ohmiques additionnées aux pertes par réflexion, en bande S, respectivement sur la voie Somme et sur la voie Différence.

Les deux circuits imprimés 9 comprenant les lignes d'alimentation 81 sont avantageusement disposées à l'intérieur de l'iris 11. Cela permet en effet de réduire la longueur des lignes imprimées 81 reliant les sondes d'excitation 8 diamétralement opposés à une valeur minimale de l'ordre de deux longueurs d'ondes guidées. Les enroulements de phase modulo $2\pi$ entre deux sondes d'excitation 8 diamétralement opposés en fonction de la fréquence sont alors limités au maximum. Ceci garantit une excitation sur une plus large bande de fréquence des modes TE$_{21}$ et TE$_{11}$.

L'orthogonalité de ces deux modes dans la pseudo-cavité résonnante 100 coaxiale permet de s'affranchir totalement de la limite de Stein et produit un découplage idéal inférieur à -30dB entre les voies somme et différence.

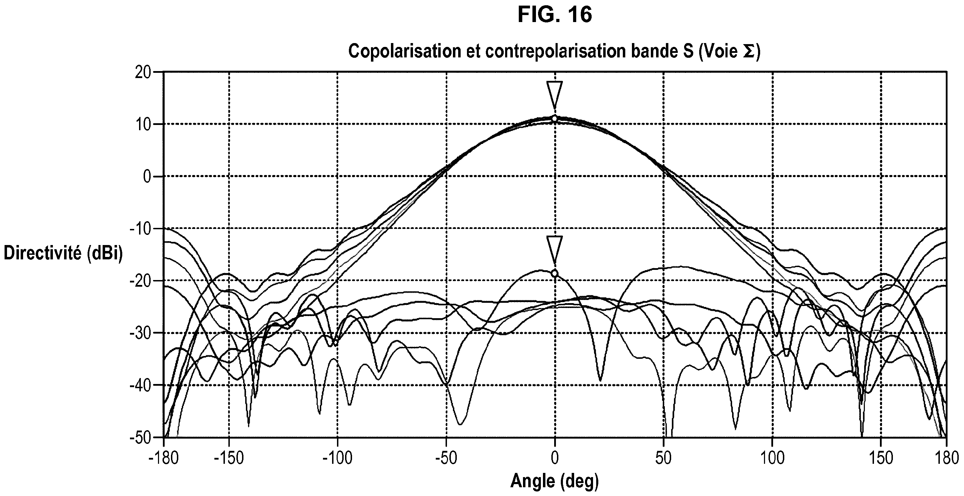

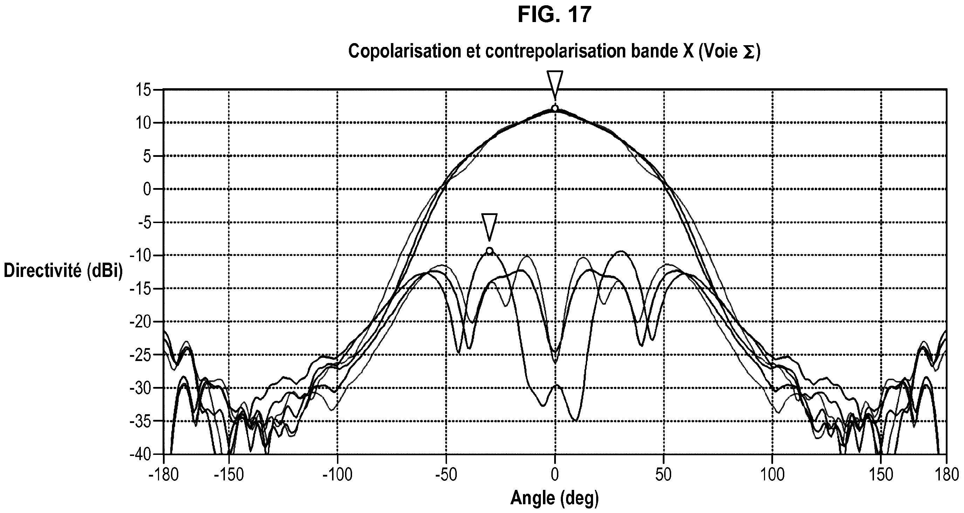

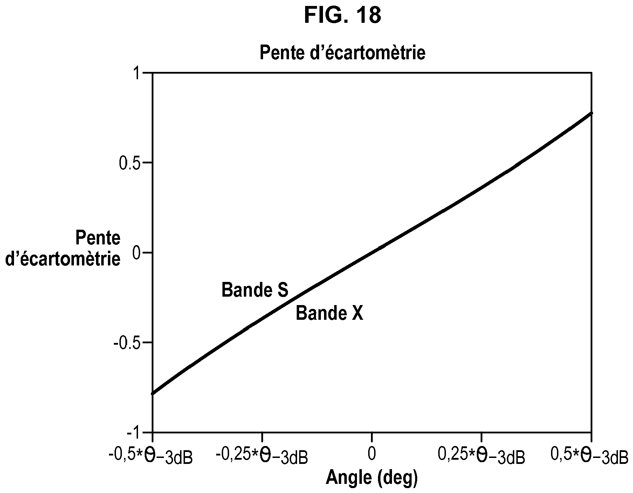

Grâce à l'intégration des circuits imprimés 9 portant les lignes d'alimentation 81 dans l'iris 11, il est possible de conserver, sur une large bande, une très grande efficacité de rayonnement (proche de 95%), tout en minimisant les pertes ohmiques et en maintenant des diagrammes de rayonnement d'excellente qualité. Comme illustré par les figures 16 et 17 représentant les diagrammes de rayonnement de la copolarisation et la contrepolarisation respectivement en bande S et X, une très bonne pureté de polarisation et une très bonne sphéricité de l'onde rayonnée (par l'absence d'interférences destructives liées à l'onde réfléchie) sont obtenues. En effet, comme on peut le voir sur la figure 16, la contrepolarisation en bande S est inférieure à -30dB par rapport à la copolarisation, et comme on peut le voir sur la figure 17, la contrepolarisation en bande X est inférieure à -22dB. Comme illustré par la figure 18, la pente d'écartométrie est proche de la limite théorique de 1.4/$\theta_{-3dB}$, avec $\theta_{-3dB}$ l'angle d'ouverture à -3dB. Les pentes d'écartométrie en bande S et X sont superposées, ce qui illustre le fait que les performances sont identiques en bande S et en bande X.

La voie somme étant générée uniquement par le guide d'onde coaxial 400, elle peut de ce fait tolérer des puissances d'autant plus élevées en émission (500 à 700W voire au-delà...) que les arêtes mécaniques des iris ont été chanfreinées ou arrondies pour limiter les pics localisés de champ électrique propices aux amorces de claquage.

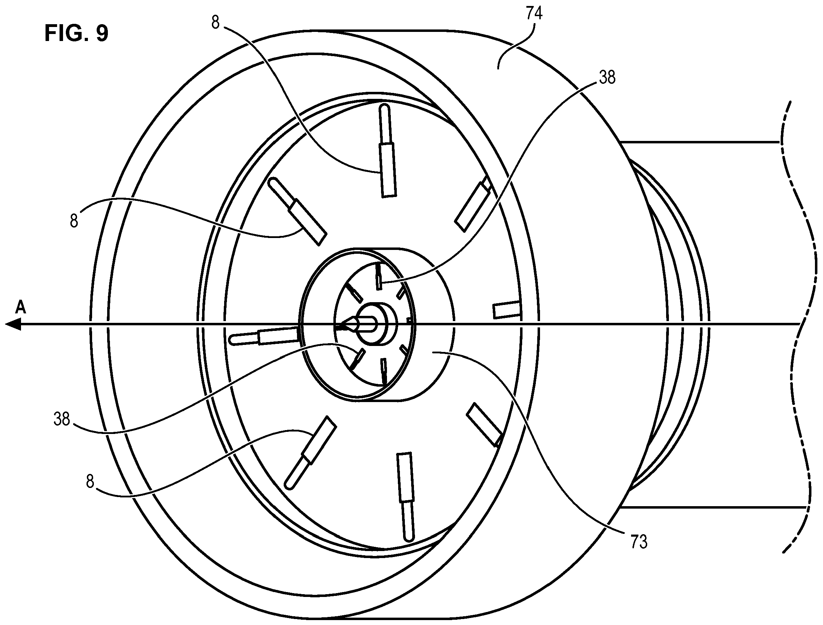

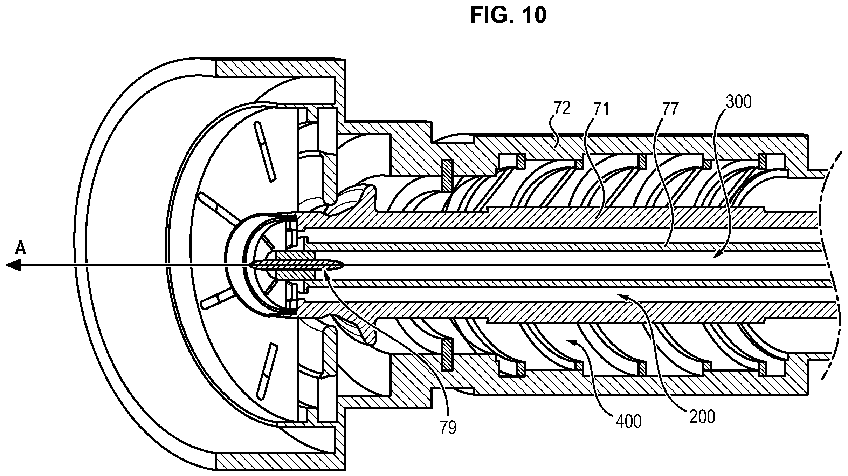

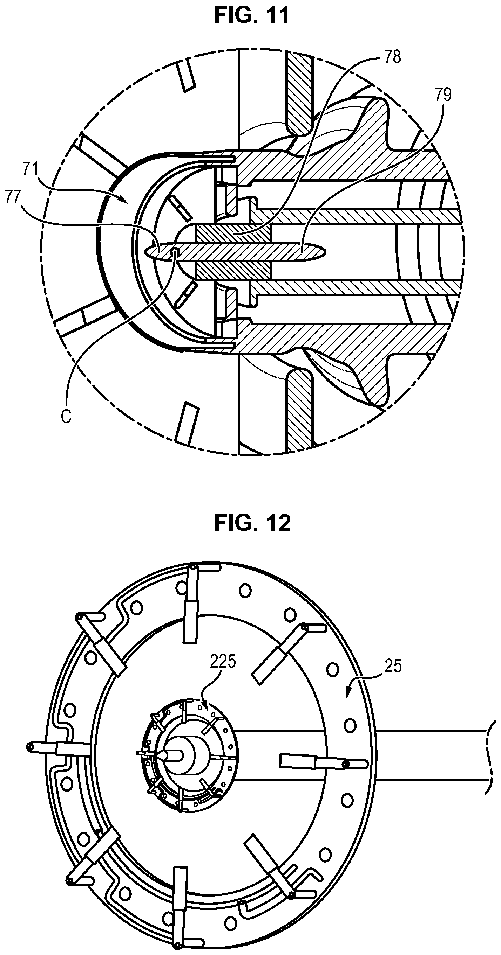

En référence aux figures 9 à 12, dans un mode de réalisation particulier permettant un fonctionnement sur trois bandes de fréquence, une bande de fréquence inférieure, une bande de fréquence intermédiaire et une bande de fréquence supérieure, la source 1 comporte en outre un troisième cornet 77 positionné à l'intérieur du cornet interne 71, et un troisième dispositif d'excitation pour exciter le guide d'onde central secondaire 300 de manière à générer un signal de voie somme et un signal de voie différence à une troisième fréquence.

Le troisième cornet 77 positionné à l'intérieur du cornet interne 71 délimite un guide d'onde de la fréquence supérieure 300.

Le troisième cornet 77 et le cornet interne 71 définissent entre eux un guide d'onde de la fréquence intermédiaire 200.

Le cornet interne 71 et le cornet externe 72 définissent entre eux un guide d'onde de la fréquence inférieure 400.

La source 1 comporte en outre un second circuit d'alimentation différence 225 et une seconde série de huit sondes d'excitation 28 identiques aux sondes 8 mais plus petites que celles-ci et positionnées dans l'embouchure 73 du cornet interne 71 pour exciter les deux modes TE21 en quadrature dans la bande de fréquence intermédiaire.

La source 1 comprend en outre un insert diélectrique 79 en téflon. L'insert diélectrique 79 est inséré dans l'embouchure du troisième cornet 77. L'insert diélectrique 79 permet de faire coïncider le centre de phase C du troisième cornet 77 avec le centre de phase du cornet interne 71. L'insert diélectrique 79 est maintenu sur l'axe principal d'émission A par un élément de maintien 78 en mousse à faible constante diélectrique. Cet insert diélectrique présente la particularité d'adapter simultanément l'impédance des modes $TE_{11}$ (voie Somme) et $TE_{21}$ (voie Différence) se propageant à l'intérieur du guide d'onde cylindrique central 300 dans la bande de fréquence supérieure.

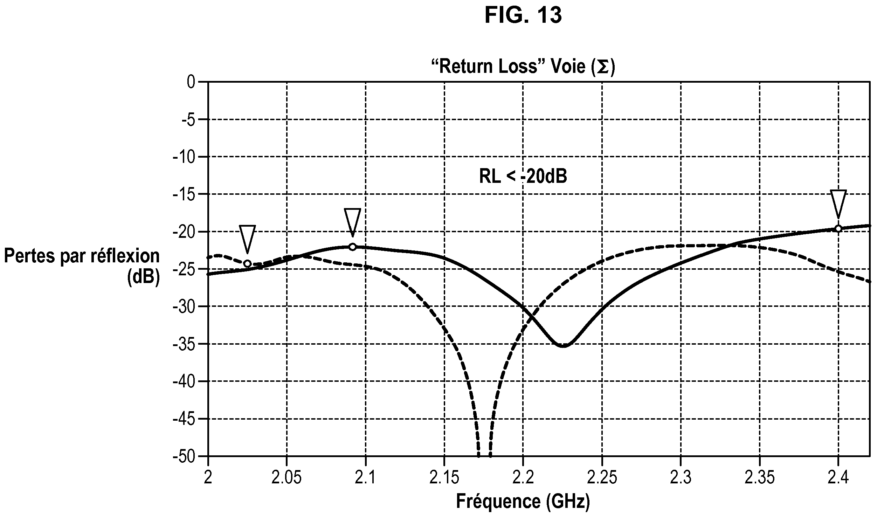

En référence à la figure 13, il peut être observé que les pertes par réflexion sur la voie somme de la première bande de fréquence, en l'occurrence la bande S (bande de fréquences définie sur la partie du spectre électromagnétique allant de 2 à 2.4 GHz), sont inférieures à -14dB.

## Revendications

1. Source (1) pour antenne à réflecteur, comprenant :

   - une pseudo-cavité (100),
   - un premier dispositif d'excitation sigma (10) pour exciter la pseudo-cavité (100) selon deux modes $TE_{11}$ orthogonaux de manière à générer un signal de voie somme via un guide d'onde coaxial (400),
   - un deuxième dispositif d'excitation (20) pour exciter la pseudo-cavité (100) selon deux modes $TE_{21}$ de manière à générer un signal de voie différence par combinaison en quadrature des deux modes $TE_{21}$, le deuxième dispositif (20) comprenant huit sondes (8) réparties angulairement autour d'un axe principal (A) d'émission de la source (1), et un circuit d'alimentation différence (25) pour alimenter les huit sondes d'excitation (8) selon les deux modes $TE_{21}$,

   dans laquelle le circuit d'alimentation différence (25) comprend quatre lignes d'alimentation (81) alimentant chacune deux sondes (8) diamétralement opposées, chaque ligne d'alimentation (81) comprenant une branche d'alimentation commune (88) et deux branches d'alimentation terminales (89) chacune raccordée d'une part à la branche d'alimentation commune (88) en un point d'embranchement (P3) et d'autre part à une sonde d'excitation (8) respective en un point d'excitation (P1, P2) de la sonde, et dans laquelle les branches terminales (89) sont dimensionnées de sorte qu'un couplage du signal de voie somme avec les huit sondes d'excitation (8) de la voie différence génère une onde stationnaire sur les branches d'alimentation terminales (89), l'onde stationnaire présentant un noeud de champ électrique au point d'embranchement (P3) et un noeud de champ magnétique à chacun des points d'excitation des sondes (P1, P2).

2. Source selon la revendication 1, dans laquelle la longueur physique de chaque branche d'alimentation terminale (89) est choisie de manière à déphaser l'onde électromagnétique qui se propage dans la branche d'alimentation terminale (89) depuis le point d'embranchement (P3) jusqu'au point d'excitation (P1, P2) d'une valeur égale à la moitié d'un multiple impair de 180 degrés.

3. Source selon la revendication 1 ou 2, dans laquelle la longueur physique de chaque branche d'alimentation terminale (89) est choisie de manière à déphaser l'onde électromagnétique qui se propage dans la branche d'alimentation terminale (89) depuis le point d'embranchement (P3) jusqu'au point d'excitation (P1, P2) d'une valeur égale à 270 degrés.

4. Source selon la revendication 1 ou 2, dans laquelle la longueur physique de chaque branche d'alimentation terminale (89) est choisie de manière à déphaser l'onde électromagnétique qui se propage dans la branche d'alimentation terminale (89) depuis le point d'embranchement (P3) jusqu'au point d'excitation (P1, P2) d'une valeur égale à 450 degrés.

5. Source selon l'une des revendications précédentes, comportant en outre un iris (11) positionné en sortie de la pseudo-cavité (100) pour réaliser une adaptation d'impédance et limiter une perte par réflexion du signal de voie somme, l'iris (11) supportant intérieurement le circuit d'alimentation de voie différence. (25), l'iris (11) étant adapté pour empêcher toute propagation du mode $TE_{21}$ généré par les huit sondes (8) vers le guide d'onde coaxial (400).

6. Source selon l'une des revendications précédentes, comprenant en outre un cornet externe (72) et un cornet interne (71), le cornet externe (72) et le cornet interne (71) définissant entre eux la pseudo-cavité (100) dans laquelle est générée le signal de voie somme à une première longueur d'onde.

7. Source selon l'une des revendications qui précèdent, comprenant :

   - un guide d'onde central secondaire (300),
   - un troisième dispositif d'excitation (30) pour exciter le guide d'onde central secondaire (300) de manière à générer un signal de voie somme et un signal de voie différence à une deuxième fréquence.

8. Source selon les revendications 6 et 7, dans laquelle le guide d'onde central secondaire (300) s'étend à l'intérieur du cornet interne (71).

9. Source selon l'une des revendications précédentes, dans laquelle les branches d'alimentation terminales (89) comprennent des lignes ruban (891).

10. Source selon l'une des revendications précédentes, dans laquelle le premier dispositif d'excitation sigma

(10) comporte un dispositif d'excitation sigma en polarisation linéaire (101) pour exciter la pseudo-cavité (100) selon deux modes TE$_{11}$ orthogonaux de manière à générer deux signaux de voie somme en polarisation linéaire, et un polariseur coaxial à iris (15) afin de générer un signal de voie somme en polarisation circulaire par combinaison en quadrature des deux modes TE$_{11}$ en polarisation linéaire.

11. Source selon la revendication précédente, dans laquelle le premier dispositif d'excitation sigma en polarisation linéaire (101) comprend une ouverture d'accès coaxial périphérique (76) à l'extrémité du cornet externe (72), un dispositif de génération du mode TE$_{11}$ horizontal (10a) et un dispositif de génération du mode TE$_{11}$ vertical (10b), le dispositif de génération du mode TE$_{11}$ horizontal (10a) et le dispositif de génération du mode TE$_{11}$ vertical (10b) comprennent chacun un connecteur coaxial (11a, 11b) et deux transitions à nervures (14a, 14b), chaque connecteur coaxial (11a, 11b) étant connecté à deux transitions à nervures (14a, 14b) antisymétriques par rapport à un plan longitudinal du guide d'onde central (200).

**Patentansprüche**

1. Quelle (1) für Reflektorantenne, umfassend:

   - eine Pseudo-Kavität (100),
   - eine erste Sigma-Erregungsvorrichtung (10), um die Pseudo-Kavität (100) gemäß zwei orthogonalen Modi TE$_{11}$ zu erregen, um ein Summenkanalsignal über einen koaxialen Wellenleiter (400) zu erzeugen,
   - eine zweite Erregungsvorrichtung (20), um die Pseudo-Kavität (100) gemäß zwei Modi TE$_{21}$ zu erregen, um ein Differenzkanalsignal durch Quadraturkombination der zwei Modi TE$_{21}$ zu erzeugen, wobei die zweite Vorrichtung (20) acht Sonden (8) umfasst, die winklig um eine Hauptsendeachse (A) der Quelle (1) verteilt sind, und einen Differenzversorgungskreis (25), um die acht Erregungssonden (8) gemäß den zwei Modi TE$_{21}$ zu versorgen,

   wobei der Differenzversorgungskreis (25) vier Versorgungsleitungen (81) umfasst, die jeweils zwei diametral gegenüberliegende Sonden (8) versorgen, wobei jede Versorgungsleitung (81) eine gemeinsame Anschlussleitung (88) und zwei terminale Anschlussleitungen (89) umfasst, die jeweils zum einem mit der gemeinsamen Anschlussleitung (88) an einer Verzweigungsstelle (P3) und zum anderen mit einer jeweiligen Erregungssonde (8) an einer Erregungsstelle (P1, P2) der Sonde verbunden sind, und wobei die terminalen Anschlüsse (89) derart bemessen sind, dass eine Kopplung des Summenkanalsignals mit den acht Erregungssonden (8) des Differenzkanals auf den terminalen Anschlussleitungen (89) eine stationäre Welle erzeugt, wobei die stationäre Welle einen elektrischen Feldknoten an der Verzweigungsstelle (P3) und einen Magnetfeldknoten an jeder der Erregungsstellen der Sonden (P1, P2) aufweist.

2. Quelle nach Anspruch 1, wobei die physische Länge jeder terminalen Anschlussleitung (89) derart ausgewählt ist, dass die elektromagnetische Welle, die sich in der terminalen Anschlussleitung (89) ab der Verzweigungsstelle (P3) bis zur Erregungsstelle (P1, P2) verbreitet, um einen Wert, der gleich der Hälfte eines ungeraden Vielfachen von 180 Grad ist, phasenverschoben wird.

3. Quelle nach Anspruch 1 oder 2, wobei die physische Länge jeder terminalen Anschlussleitung (89) derart ausgewählt ist, dass die elektromagnetische Welle, die sich in der terminalen Anschlussleitung (89) ab der Verzweigungsstelle (P3) bis zur Erregungsstelle (P1, P2) verbreitet, um einen Wert von gleich 270 Grad phasenverschoben wird.

4. Quelle nach Anspruch 1 oder 2, wobei die physische Länge jeder terminalen Anschlussleitung (89) derart ausgewählt ist, dass die elektromagnetische Welle, die sich in der terminalen Anschlussleitung (89) ab der Verzweigungsstelle (P3) bis zur Erregungsstelle (P1, P2) verbreitet, um einen Wert von gleich 450 Grad phasenverschoben wird.

5. Quelle nach einem der vorangehenden Ansprüche, aufweisend ferner eine Iris (11), die am Ausgang der Pseudo-Kavität (100) positioniert ist, um eine Impedanzanpassung durchzuführen und um einen Verlust des Summenkanalsignals durch Reflexion zu begrenzen, wobei die Iris (11) intern den Differenzkanal-Versorgungskreis (25) trägt, wobei die Iris (11) ausgebildet ist, um jedwede Verbreitung des Modus TE$_{21}$, erzeugt von den acht Sonden (8), zum axialen Wellenleiter (400) zu verhindern.

6. Quelle nach einem der vorangehenden Ansprüche, umfassend ferner ein externes Horn (72) und ein internes Horn (71), wobei das externe Horn (72) und das interne Horn (71) zwischen sich die Pseudo-Kavität (100) erzeugen, in der das Summenkanalsignal mit einer ersten Wellenlänge erzeugt wird.

7. Quelle nach einem der vorangehenden Ansprüche, umfassend:

   - einen sekundären zentralen Wellenleiter (300),
   - eine dritte Erregungsvorrichtung (30), um den sekundären zentralen Wellenleiter (300) derart zu erregen, dass ein Summenkanalsignal und ein Differenzkanalsignal in einer zweiten Frequenz erzeugt werden.

8. Quelle nach den Ansprüchen 6 und 7, wobei sich der sekundäre zentrale Wellenleiter (300) im Innern des internen Horns (71) erstreckt.

9. Quelle nach einem der vorangehenden Ansprüche, wobei die terminalen Anschlussleitungen (89) Bandleitungen (891) umfassen.

10. Quelle nach einem der vorangehenden Ansprüche, wobei die erste Sigma-Erregungsvorrichtung (10) eine Linearpolarisierungs-Sigma-Erregungsvorrichtung (101) aufweist, um die Pseudo-Kavität (100) gemäß zwei orthogonalen Modi $TE_{11}$ derart zu erregen, dass zwei Linearpolarisierungs-Summenkanalsignale erzeugt werden, und einen koaxialen Irispolarisator (15), um ein Zirkularpolarisierungs-Summenkanalsignal durch Quadraturkombination der beiden Modi $TE_{11}$ in Linearpolarisierung zu erzeugen.

11. Quelle nach vorangehendem Anspruch, wobei die erste Linearpolarisierungs-Sigma-Erregungsvorrichtung (101) eine periphere koaxiale Zugangsöffnung (76) am Ende des externen Horns (72), eine Erzeugungsvorrichtung des horizontalen Modus $TE_{11}$ (10a) und eine Erzeugungsvorrichtung des vertikalen Modus $TE_{11}$ (10b) umfasst, wobei die Erzeugungsvorrichtung des horizontalen Modus $TE_{11}$ (10a) und die Erzeugungsvorrichtung des vertikalen Modus $TE_{11}$ (10b) jeweils einen koaxialen Verbinder (11a, 11b) und Rippenübergänge (14a, 14b) umfassen, wobei jeder koaxialen Verbinder (11a, 11b) mit zwei Rippenübergängen (14a, 14b) verbunden ist, die in Bezug zu einer Längsebene des zentralen Wellenleiters (200) asymmetrisch sind.

**Claims**

1. A source (1) for a reflector antenna, comprising:

   - a pseudo-cavity (100),
   - a first sigma excitation device (10) for exciting the pseudo-cavity (100) according to two orthogonal $TE_{11}$ modes so as to generate a sum channel signal via a coaxial waveguide (400),
   - a second excitation device (20) for exciting the pseudo-cavity (100) according to two $TE_{21}$ modes so as to generate a difference channel signal by quadrature combination of the two $TE_{21}$ modes, the second device (20) comprising eight probes (8) distributed angularly around a main transmission axis (A) of the source (1), and a difference feed circuit (25) for feeding the eight excitation probes (8) according to the two $TE_{21}$ modes,

   wherein the difference feed circuit (25) comprises four feed lines (81) each feeding two diametrically opposite probes (8), each feed line (81) comprising a common feed branch (88) and two terminal feed branches (89) each connected on the one hand to the common feed branch (88) at a junction point (P3) and on the other hand to a respective excitation probe (8) at an excitation point (P1, P2) of the probe, and wherein the terminal branches (89) are dimensioned so that coupling of the sum channel signal with the eight excitation probes (8) of the difference channel generates a standing wave on the terminal feed branches (89),
   the standing wave having an electrical field node at the junction point (P3) and a magnetic field node at each of the excitation points (P1, P2) of the probes.

2. The source according to claim 1, wherein the physical length of each terminal feed branch (89) is selected so as to phase shift the electromagnetic wave which propagates in the terminal feed branch (89) from the junction point (P3) to the excitation point (P1, P2) by a value equal to half an odd-numbered multiple of 180 degrees.

3. The source according to claim 1 or 2, wherein the physical length of each terminal feed branch (89) is selected so as to phase shift the electromagnetic wave which propagates in the terminal feed branch (89) from the junction point (P3) to the excitation point (P1, P2) by a value equal to 270 degrees.

4. The source according to claim 1 or 2, wherein the physical length of each terminal feed branch (89) is selected so as to phase shift the electromagnetic wave which propagates in the terminal feed branch (89) from the junction point (P3) to the excitation point (P1, P2) by a value equal to 450 degrees.

5. The source according to one of the preceding claims, further comprising an iris (11) positioned at the output of the pseudo-cavity (100) to perform impedance adaptation and limit a return loss of the sum channel signal, the iris (11) internally supporting the difference channel feed circuit (25), the iris (11) being adapted to prevent any propagation of the $TE_{21}$ mode generated by the eight probes (8) towards the coaxial waveguide (400).

6. The source according to one of the preceding claims, further comprising an external horn (72) and an internal horn (71), the external horn (72) and the internal horn (71) defining therebetween the pseudo-cavity (100) in which is generated the sum channel signal at a first wavelength.

7. The source according to one of the preceding claims, comprising:

   - a secondary central waveguide (300),
   - a third excitation device (30) for exciting the secondary central waveguide (300) so as to generate a sum channel signal and a difference channel signal at a second frequency.

8. The source according to claims 6 and 7, wherein the secondary central waveguide (300) extends inside the internal horn (71).

9. The source according to one of the preceding claims, wherein the terminal feed branches (89) comprise strip lines (891).

10. The source according to one of the preceding claims, wherein the first sigma excitation device (10) comprises a linearly polarized sigma excitation device (101) for exciting the pseudo-cavity (100) according to two orthogonal $TE_{11}$ modes so as to generate two linearly polarized sum channel signals, and a coaxial iris polarizer (15) to generate a circularly polarized sum channel signal by quadrature combination of the two $TE_{11}$ modes linearly polarized.

11. The source according to the preceding claim, wherein the first linearly polarized sigma excitation device (101) comprises a peripheral coaxial access opening (76) at the end of the external horn (72), a generation device of the horizontal $TE_{11}$ mode (10a) and a generation device of the vertical $TE_{11}$ mode (10b), the generation device of the horizontal $TE_{11}$ mode (10a) and the generation device of the vertical $TE_{11}$ mode (10b) each comprise a coaxial connector (11a, 11b) and two ribbed transitions (14a, 14b), each coaxial connector (11a, 11b) being connected to two ribbed transitions (14a, 14b) antisymmetric relative to a longitudinal plane of the central waveguide (200).

**FIG. 1**

**FIG. 2**

81

8

20

8

$L_2$

8

8

81

81

8

81

8

8

81

25

Diamètre ≈
une longueur
d'onde $\lambda$g

**FIG. 2bis**

$P_1$

$L_2/2$

$L_2/2$

$L_2$

$L_1/2$

$L_1/2$

$P_2$

$P_1$

$$L_2 = \left[ (2n+1) - \frac{2L_1}{\lambda_{g1}} \right] \cdot \frac{\lambda_g}{2} \quad n \geqslant 1$$

**Equation 1**

# FIG. 3

## FIG. 3a

## FIG. 3b

# FIG. 3c

**FIG. 4**

**FIG. 5**

**FIG. 6**

FIG. 7

**FIG. 8a**

Port 3 (50 $\Omega$)
(voie isolée)

$\lambda_g/4$

Amplitude du champ $\vec{E}$
(onde progressive issue du port 2)

Amplitude du champ $\vec{E}$
(onde progressive issue du port 1)

Onde stationnaire (n = 2)

• Noeud de l'onde stationnaire

$\lambda_g/2$

$P_3$

$\lambda_g/2$

$L = (2n+1)\dfrac{\lambda_g}{2}$

$\lambda_g/4$

$P_1$

$$L = 2 \times \left( \frac{n\lambda_g}{2} + \frac{\lambda_g}{4} \right) = (2n+1)\frac{\lambda_g}{2} \quad n \in N \text{ et } n \geqslant 1$$

$P_2$

Port 1 (50 $\Omega$)

Port 2 (50 $\Omega$)

$\phi$ onde progressive
entrante = 0deg   $\phi$ onde progressive
sortante = 360deg

$\phi$ onde progressive
entrante = 180deg   $\phi$ onde progressive
sortante = 180deg

FIG. 8b

Port 3 (50 Ω)
(voie isolée)

Port 1 (50 Ω)

Port 2 (50 Ω)

$P_1$

$P_2$

$P_3$

$\lambda_g/4$

$\lambda_g/2$

$\lambda_g/2$

$\lambda_g/2$

$\lambda_g/4$

$L = (2n+1)\dfrac{\lambda_g}{2}$

$L = 2 \times \left( \dfrac{n\lambda_g}{2} + \dfrac{\lambda_g}{4} \right) = (2n+1)\dfrac{\lambda_g}{2}$  $n \in \mathbb{N}$ et $n \geqslant 1$

Φ onde progressive entrante = 0deg ┊ Φ onde progressive sortante = 360deg

Φ onde progressive entrante = 180deg ┊ Φ onde progressive sortante = 180deg

—— Amplitude du champ $\vec{E}$ (onde progressive issue du port 2)

········ Amplitude du champ $\vec{E}$ (onde progressive issue du port 1)

—·— Onde stationnaire (n = 2)

● Noeud de l'onde stationnaire

FIG. 8c

Port 3 (50 Ω)
(voie isolée)

$\lambda_g/4$

Amplitude du champ $\vec{E}$
(onde progressive issue du port 2)

Amplitude du champ $\vec{E}$
(onde progressive issue du port 1)

Onde stationnaire (n = 2)

● Noeud de l'onde stationnaire

$\lambda_g/2$

$P_3$

$\lambda_g/2$

$L = (2n+1)\dfrac{\lambda_g}{2}$

$P_1$

$\lambda_g/4$

$$L = 2 \times \left( \dfrac{n\lambda_g}{2} + \dfrac{\lambda_g}{4} \right) = (2n+1)\dfrac{\lambda_g}{2} \quad n \in N \text{ et } n \geqslant 1$$

$P_2$

Port 1 (50 Ω)

φ onde progressive
entrante = 0deg

φ onde progressive
sortante = 360deg

Port 2 (50 Ω)

φ onde progressive
entrante = 180deg

φ onde progressive
sortante = 180deg

EP 3 180 816 B1

**FIG. 8d**

Port 3 (50 Ω)
(voie isolée)

- - - - - - - - Amplitude du champ $\vec{E}$
(onde progressive issue du port 2)

· · · · · · · · · Amplitude du champ $\vec{E}$
(onde progressive issue du port 1)

— · — · — Onde stationnaire (n = 2)

● Noeud de l'onde stationnaire

$\lambda_g/4$

$\lambda_g/2$

$P_3$

$\lambda_g/2$

$L = (2n+1)\dfrac{\lambda_g}{2}$

$$L = 2 \times \left(\frac{n\lambda_g}{2} + \frac{\lambda_g}{4}\right) = (2n+1)\frac{\lambda_g}{2} \quad n \in N \text{ et } n \geqslant 1$$

$\lambda_g/4$ $P_1$

$P_2$

Port 1 (50 Ω)

Port 2 (50 Ω)

$\phi$ onde progressive ↑ ⁝ ↓ $\phi$ onde progressive
entrante = 0deg ⁝ sortante = 360deg

$\phi$ onde progressive ↑ ⁝ ↓ $\phi$ onde progressive
entrante = 180deg ⁝ sortante = 180deg

EP 3 180 816 B1

FIG. 9

**FIG. 10**

## FIG. 11

## FIG. 12

## FIG. 13

"Return Loss" Voie ($\Sigma$)

RL < -20dB

Pertes par réflexion (dB)

Fréquence (GHz)

# FIG. 14

**Pertes ohmiques (Voies Σ <u>bande S</u>)**

Pertes (dB)

Fréquence (en GHz)

# FIG. 15

**Pertes ohmiques (Voies Δ <u>bande S</u>)**

Pertes (dB)

Fréquence (en GHz)

# FIG. 16

## Copolarisation et contrepolarisation bande S (Voie Σ)

EP 3 180 816 B1

## FIG. 17

Copolarisation et contrepolarisation bande X (Voie Σ)

# FIG. 18

**Pente d'écartomètrie**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **STEIN ; SEYMOUR.** On cross coupling in multiple-beam antennas. *Antennas and Propagation, IRE Transactions on,* Septembre 1962, vol. 10 (5), 548, , 557

- **JOHANSSON, J.F.** Stein's limit for finite and infinite multi-beam arrays. *Antennas and Propagation Society International Symposium, 1989. AP-S. Digest,* 26 Juin 1989, vol. 2, 713, , 716